# EUROPÄISCHE PATENTANMELDUNG

(11) **EP 4 545 358 A1**
(43) Veröffentlichungstag der Anmeldung: **30.04.2025**
(21) Anmeldenummer: 24190660.1
(22) Anmeldetag: 24.07.2024
(51) Int. Cl.: B60Q 1/30, B60Q 1/32, F21S 43/14, F21S 43/15, F21S 43/19, F21S 43/20, F21S 43/31, F21S 43/40, F21S 45/50, F21S 43/50, F21W 103/15

(54) **RETROREFLEKTIERENDER LINEARER BELEUCHTUNGSSTREIFEN**

(30) Priorität: 24.10.2023 DE 102023129163
(71) Anmelder: ASPÖCK Systems GmbH, 4722 Peuerbach (AT)
(72) Erfinder: NAGL, Benjamin, 4702 Wallern an der Trattnach (AT)
(74) Vertreter: Söllner, Udo

(57) **Zusammenfassung**

Es wird ein retroreflektierender linearer Beleuchtungsstreifen (10) vorgeschlagen mit einem Basisprofil (20), einer Platine (30) mit darauf angeordneten Leuchtelementen (40, 50) und mit mindestens einer Vergussmasse (70, 75, 76), wobei auf der Platine (30) ein Retroreflektor (60) angeordnet ist, wobei der Retroreflektor (60) und die Leuchtelemente (40, 50) von einer Vergussmasse (70, 75) bedeckt sind und dass in einer Längsrichtung (15) der Platine (30) gesehen entweder mindestens ein erster Bereich (49, 59) angeordnet ist, auf dem mindestens ein Leuchtelement (40, 50) angeordnet ist, oder mindestens ein zweiter Bereich (69) angeordnet ist, auf dem der Retroreflektor (60) angeordnet ist.

## Beschreibung

Die vorliegende Erfindung betrifft einen retroreflektierenden linearen Beleuchtungsstreifen, der mit einem Basisprofil mit einer Bodenwand und zwei Seitenwänden, einer an der Bodenwand angebrachten Platine mit darauf angeordneten Leuchtelementen und einer Vergussmasse gebildet ist.

Bei der vorstehend erwähnten Platine mit darauf angeordneten Leuchtelementen kann es sich um ein flexibles Leuchtdiodenband handeln, welches in dem Beleuchtungsstreifen angeordnet ist, der beispielsweise für Beleuchtungszwecke an einem insbesondere gezogenen Fahrzeug vorgesehen ist. Retroreflektierende lineare Beleuchtungsstreifen können beispielsweise für Seitenmarkierungsleuchten, abgekürzt SML und Konturmarkierungen an Fahrzeugen eingesetzt werden.

Ein solcher Beleuchtungsstreifen wird gebildet, indem das Leuchtdiodenband in ein bereit gestelltes flexibles Profil aus Kunststoff beispielsweise durch Kleben montiert wird. Das vorstehend genannte Profil wird nachfolgend auch als Basisprofil bezeichnet. Der mit den genannten Teilen gebildete Beleuchtungsstreifen wird nach dem Einbringen des Leuchtdiodenbandes in das Profil oft mit durchsichtigem und/oder transluzenten Kunststoff vergossen, um das darin befindliche Leuchtdiodenband vor Umwelteinflüssen wie Feuchtigkeit, Nässe und Korrosion zu schützen. Dieser Kunststoff wird im folgenden Text auch als Vergussmasse bezeichnet.

Ein Leuchtdiodenband wird oftmals mit einer Platine aus flexiblem Kunststoff ausgeführt. Diese Platine kann zwei oder mehr sich entlang der Längsrichtung des Leuchtdiodenbandes erstreckende Kupferlayer oder Leiterbahnen beispielsweise aus Kupfer aufweisen, welche an einer flexiblen Leiterplatte vorgesehen sind. Die Leuchtdioden werden beispielsweise mittels Chip-on-board (COB) Technologie oder Surface-Mounted-Device (SMD) Technologie an der Platine montiert und mit den Kupferbahnen verbunden.

Die nicht vorveröffentlichte Patentanmeldung DE 10 2022 134 500.9 zeigt einen Beleuchtungsstreifen mit einem Basisprofil, einem Leuchtdiodenband und einer Vergussmasse, wobei der Beleuchtungsstreifen mit Trennelementen versehen ist.

Das Gebrauchsmuster DE 20 2014 102 938 U1 zeigt eine aktive Nutzfahrzeugkonturmarkierung, bei der ein retroreflektierendes Element auf oder neben einem mit Leuchten versehenen Trägerband angebracht ist. Um den Durchtritt des von den Leuchten abgegebenen Lichts im Falle der Anbringung des retroreflektierenden Elements auf dem Trägerband zu ermöglichen, wird die retroreflektierende Fläche jeweils im Bereich einer Leuchte durch ein Lichtaustrittsfenster unterbrochen.

Der vorliegenden Erfindung liegt die Aufgabe zugrunde, einen verbesserten Beleuchtungsstreifen bereitzustellen, der einen Retroreflektor aufweist. Weiter besteht die Aufgabe in der Bereitstellung eines für solche Beleuchtungsstreifen geeigneten Montageprofils sowie der Bereitstellung eines Fahrzeugaufbaus mit einem solchen Beleuchtungsstreifen.

Die Erfindung weist zur Lösung dieser Aufgabe hinsichtlich des Beleuchtungsstreifens die Merkmale nach den Ansprüchen 1 bis 12 auf. Hinsichtlich des Montageprofils weist die Erfindung die Merkmale nach Anspruch 13 auf. Hinsichtlich des Fahrzeugaufbaus schließlich weist die Erfindung die Merkmale nach Anspruch 14 auf.

Die Erfindung schafft einen retroreflektierenden linearen Beleuchtungsstreifen mit einem Basisprofil, einer Platine mit darauf angeordneten Leuchtelementen und mit mindestens einer Vergussmasse, wobei auf der Platine ein Retroreflektor angeordnet ist, dadurch gekennzeichnet, dass der Retroreflektor und die Leuchtelemente von einer Vergussmasse bedeckt sind und dass in einer Längsrichtung der Platine gesehen entweder mindestens ein erster Bereich angeordnet ist, auf dem mindestens ein Leuchtelement angeordnet ist, oder mindestens ein zweiter Bereich angeordnet ist, auf dem der Retroreflektor angeordnet ist. Die ersten und zweiten Bereiche sind also in Längsrichtung der Platine gesehen abwechselnd angeordnet. Dadurch befindet sich kein retroreflektierendes Element in Querrichtung der Platine oder des Basisprofils gesehen neben einem Leuchtelement.

In dem Basisprofil sind Leuchtdiodenbänder vorgegebener Länge angeordnet, wobei jedes Leuchtdiodenband eine flexible Platine aufweist, die eine im Vergleich zur Breite sehr große Längsausdehnung hat. Auf einer Seite dieser Platine ist eine Mehrzahl von Leuchtdioden angebracht, während die andere, von den Leuchtdioden abgewandte Seite der Platine an der Bodenwand des Basisprofils angeordnet werden kann. Somit befindet sich das Leuchtdiodenband in der Innenausnehmung des Basisprofils aufgenommen. Hierbei erstrecken sich die mindestens zwei Bereiche jeweils in Längsrichtung des Beleuchtungsstreifens.

Das Basisprofil kann als ein flexibles Kunststoffprofil ausgebildet sein und an einer Bodenwand des Kunststoffprofils die erwähnte Platine mit Leuchtelementen aufnehmen. Das Kunststoffprofil verfügt darüber hinaus über zwei Seitenwände, die sich von gegenüberliegenden Seiten der Bodenwand so weit von der Bodenwand weg erstrecken, dass die Seitenwände eine an der Bodenwand festgelegte Platine mit Leuchtelementen überragen. Die Bodenwand und die beiden Seitenwände bilden somit ein langgestrecktes, kanalförmiges Profil. Nachdem eine Platine mit Leuchtelementen in diesem Profil festgelegt wurde, kann auf der Platine der Retroreflektor angebracht werden und das kanalförmige Profil mit einer zumindest im Bereich der Leuchtdioden transparenten Vergussmasse gefüllt werden.

Die Platine ist in Längsrichtung unterteilt in Bereiche, wobei auf ersten Bereichen Leuchtelemente angebracht sind. Zweite Bereiche der Platine hingegen sind nicht mit Leuchtelementen versehen. Auf der Fläche der Platine, auf der in ersten Bereichen Leuchtelemente angebracht sind, werden in zweiten Bereichen der oder die Retroreflektoren angebracht. Wenn die Platine und der oder die Retroreflektoren im Basisprofil angebracht worden sind, wird eine Deckschicht aus Vergussmasse in das Basisprofil eingebracht, wobei die Vergussmasse die Platine mit Leuchtelementen und den oder die Retroreflektoren bedeckt, also überdeckt oder abdeckt.

Leuchtelemente im Sinne des vorliegenden Dokuments werden wegen der bevorzugten geringen Bauhöhe insbesondere aus Leuchtdioden gebildet. Leuchtelemente mit Leuchtdioden, die in SMD-Technologie ausgeführt sind, sind als lötbare Bausteine zur Anbringung auf Platinen ausgeführt. Die Größe dieser Bausteine beträgt einige Millimeter bis hin zu wenigen Zentimetern. Weiter können Leuchtelemente auch aus Mikro-Leuchtdioden, abgekürzt Mikro-LEDs ausgeführt sein, welche eine geringe Größe aufweisen. Chips mit einer Vielzahl von Mikro-LEDs eignen sich zum Aufbau von Leuchtdiodenbändern in COB-Technik, wie weiter unten erläutert wird.

Ein Vorteil dieser Anordnung mit Vergussmasse sowohl auf den Leuchtelementen als auch auf den Retroreflektoren besteht im Schutz der Platine, der Leuchtdioden und des Retroreflektors, der oft aus einer Folie gebildet ist, gegen mechanische Belastungen, wie sie beispielsweise durch die Verwendung eines Hochdruckreinigers entstehen. Die Vergussmasse verbessert auch die elektrischen Isolationseigenschaften des Beleuchtungsstreifens, insbesondere den Durchschlagsschutz.

In Ausführungsformen ist der Beleuchtungsstreifen mit dem Basisprofil in einem Montageprofil derart anordenbar, dass Beleuchtungsstreifen und Montageprofil flächenbündig miteinander abschließen.

Wenn das Basisprofil des Beleuchtungsstreifens mit seinem äußeren Umriss so ausgeformt ist, dass es durch einen einfachen Vorgang wie Einschnappen oder Clipsen in ein Montageprofil eingesetzt werden kann, lässt sich der Beleuchtungsstreifen auf einfache und sichere Weise mit dem Montageprofil verbinden. Dieses Montageprofil kann Teil eines Fahrzeugaufbaus wie eines Aufliegers oder einer Karosserie sein.

Darüber hinaus gewährleistet die Anbringung des Beleuchtungsstreifens in einem Montageprofil den Schutz des Beleuchtungsstreifens vor Umwelteinflüssen und mechanischer Beschädigung. Wenn nicht nur das Basisprofil, sondern auch Platine und Retroreflektoren aus biegsamen Kunststoff gefertigt sind und wenn weiterhin auch die Vergussmasse biegsam ausgeführt ist, wird es möglich sowohl bei der Fertigung als auch bei der Lieferung des Beleuchtungsstreifens diesen aufzurollen. Vorteile dieser Ausführungsform bestehen bei der Fertigung ebenso wie beim Transport der Beleuchtungsstreifen im verringerten Raumbedarf für Basisprofil, Platine, Retroreflektor und den fertigen Beleuchtungsstreifen.

In Ausführungsformen ist das Basisprofil des Beleuchtungsstreifens an mindestens einer Innenseite einer Seitenwand mit einer Vertiefung zur Aufnahme des Retroreflektors und/oder der Platine versehen. Hinterschnittene Befestigungselemente wie die Vertiefungen ermöglichen eine sichere Verankerung der Platine und/oder des Retroreflektors im Basisprofil. Die Vertiefungen dienen sozusagen als Schnapphaken zur sicheren Halterung der Platine und/oder des Retroreflektors.

Eine solche stabile Verbindung zwischen Platine und/oder Retroreflektor mit dem Basisprofil trägt zur Verhinderung einer Delaminierung der einzelnen Schichten bei. Diese Ausführungsform verhindert die Ablösung der einzelnen Elemente, nämlich des Basisprofils, der Platine, des Retroreflektors und/oder der Vergussmasse oder Vergussmassen, in dem Fall, dass der Beleuchtungsstreifen gebogen wird. Gerade die vorstehend erwähnte Anbringung des Beleuchtungsstreifens in einem Montageprofil durch Einschnappen bringt durch die dabei notwendige mechanische Verformung die Gefahr der Delaminierung mit sich.

In Ausführungsformen ist der Beleuchtungsstreifen so ausgeführt, dass eine erste Vergussmasse, die auf einer von einer Bodenwand des Basisprofils abgewandten Seite angeordnet ist, sowohl den mindestens einen ersten Bereich als auch den mindestens einen zweiten Bereich durchgehend bedeckt. Diese durchgehende Bedeckung erzeugt eine gleichmäßige und ebene Oberfläche des Beleuchtungsstreifens, die einen guten Schutz gegen Umwelteinflüsse und mechanische Beschädigung bietet.

In Ausführungsformen ist im Basisprofil des Beleuchtungsstreifens ein Trennelement zwischen den ersten und zweiten Bereichen angeordnet. Ein Trennelement bewirkt in opaker Ausführung eine sichere optische Trennung zwischen den ersten und zweiten Bereichen des Beleuchtungsstreifens sowie eine sichere Trennung von erster und zweiter Vergussmasse.

Das Trennelement dient hierbei der Trennung des Beleuchtungsstreifens in verschiedene Bereiche. Das Trennelement kann weiter unterschiedliche Bereiche des Beleuchtungsstreifens nach außen, also für den Benutzer oder andere Verkehrsteilnehmer, optisch kennzeichnen. Dies kann geschehen, indem die Oberseite des Trennelements in einer anderen Farbe gehalten ist als die oberste Schicht der Vergussmasse. Die Farbe der Oberseite des Trennelements kann sich dabei von der Farbe des übrigen Beleuchtungsstreifens unterscheiden. Diese andere Farbe kann beispielsweise schwarz sein.

Das Trennelement dient auch der Eindämmung der Vergussmasse. Insbesondere können in den verschiedenen Bereichen verschiedene Vergussmassen verwendet werden, beispielsweise eine Vergussmasse für den ersten Bereich mit Leuchtelementen und eine zweite Vergussmasse für den zweiten Bereich mit dem Retroreflektor, wenn Trennelemente zum Einsatz kommen. Dies ist besonders vorteilhaft, wenn die Vergussmasse zumindest in einem Bereich verschiedene übereinander angeordnete Schichten enthält.

Bevorzugte Materialien für das Trennelement sind die Materialien, aus denen das Basisprofil gefertigt werden kann. Besonders bevorzugt ist die Verwendung desselben Materials, aus dem das Basisprofil gefertigt ist. Es ist aber auch möglich, Materialien zu verwenden, die als Vergussmasse eingesetzt werden.

In Ausführungsformen ist der Beleuchtungsstreifen so ausgeführt, dass eine erste Vergussmasse den oder die ersten Bereiche bedeckt und eine zweite Vergussmasse den oder die zweiten Bereiche bedeckt. Durch die Verwendung unterschiedlicher Vergussmassen wird eine Beeinflussung des Erscheinungsbilds des Beleuchtungsstreifens bei ausgeschalteten Leuchtelementen möglich. Dieses Erscheinungsbild des Beleuchtungsstreifens bei ausgeschalteten Leuchtelementen wird auch als Kaltdesign bezeichnet.

In Ausführungsformen ist mindestens eine der Vergussmassen des Beleuchtungsstreifens mit Füllstoffen versehen, die eine Streuung des Lichts bewirken. Durch die Verwendung einer mit Streuelementen versehenen Vergussmasse wird das von den Leuchtdioden abgegebene Licht diffus, wodurch die Grenzen der Leuchtdioden und die Abstände zwischen den einzelnen Leuchtdioden schlechter wahrnehmbar sind. So wird ein homogenes Erscheinungsbild des Beleuchtungsstreifens bewirkt.

In Ausführungsformen des Beleuchtungsstreifens ist mindestens eine der Vergussmassen in einem für Menschen sichtbaren Spektralbereich gefärbt. Auf diese Weise lässt sich das Kaltdesign, also das Erscheinungsbild für den Betrachter beeinflussen, beispielsweise indem der nicht aktivierte Beleuchtungsstreifen dem Betrachter orange, rot oder anthrazit erscheint. Damit lässt sich die optische Erscheinung des Beleuchtungsstreifens beeinflussen.

In Ausführungsformen ist die Dicke einer zweiten Vergussmasse, die auf dem Retroreflektor angeordnet ist, so gewählt, dass reflektiertes Licht maximale Intensität aufweist. Dadurch wird die Helligkeit und damit die Sichtbarkeit eines beispielsweise von einem Scheinwerfer angestrahlten Beleuchtungsstreifens erhöht.

In Ausführungsformen sind Leuchtelemente und Platine des Beleuchtungsstreifens in COB-Technik ausgeführt. Hier lässt sich durch Verwendung einer Vielzahl von Mikro-LEDs mit einer Größe von typischerweise 50 µm oder mehr in einem einzigen Chip eine Dichte von mehreren Hundert, beispielsweise 300 bis 500 Leuchtdioden auf einer Länge von 1 m erreichen. So stehen bei 300 Mikro-LEDs pro Meter etwa 3,3 mm pro LED zur Verfügung, und bei 500 Mikro-LEDs pro Meter etwa 2 mm pro LED. Diese Mikro-LEDs bilden oft eine zusammenhängende Fläche auf der auch als Board bezeichneten Platine. Die genannten hohen Flächendichten an Mikro-LEDs bewirken ein homogenes Erscheinungsbild des leuchtenden Bereichs des Beleuchtungsstreifens, insbesondere in Verbindung mit den vorstehend erwähnten, die diffuse Abstrahlung des Beleuchtungsstreifens erhöhenden Füllstoffen. Somit erscheint die Lichtabstrahlung von der ganzen Fläche des ersten Bereichs auszugehen und nicht nur von einzelnen punktuell oder kleinflächig begrenzten Bereichen.

In Ausführungsformen sind Leuchtelemente und Platine des Beleuchtungsstreifens in SMD-Technik ausgeführt. Diese Technik ist leicht verfügbar und bewährt.

In Ausführungsformen des Beleuchtungsstreifens ist der mindestens eine erste Bereich so mit dritter Vergussmasse bedeckt, dass eine von einer Bodenwand des Basisprofils abgewandte Oberfläche der Vergussmasse eben ist. So kann die von der Bodenwand des Basisprofils gemessene Höhe des ersten Bereichs so eingestellt werden, dass sie gleich der Höhe des mit dem Retroreflektor versehenen zweiten Bereichs ist. Dann muss die Menge der ersten Vergussmasse beim Übergang zwischen ersten und zweiten Bereich nicht verändert werden.

Die Erfindung umfasst auch ein Montageprofil zur Aufnahme eines vorstehend beschriebenen Beleuchtungsstreifens. Durch die Anpassung des inneren Querschnitts des Montageprofils an den äußeren Umriss des Außenprofils des Basisprofils wird die sichere Halterung des Beleuchtungsstreifens im Montageprofil gewährleistet, ohne dass Haltemittel wie Klebstoffe oder Klebebänder verwendet werden müssen. Weiter lässt sich so die Montage des Beleuchtungsstreifens vereinfachen.

Schließlich umfasst die Erfindung einen Fahrzeugaufbau mit einem vorstehend beschriebenen Beleuchtungsstreifen.

Die Erfindung wird im folgenden Text anhand der Zeichnung näher erläutert. Diese zeigt in:
Fig. 1 eine perspektivische Darstellung eines Teils eines in einem Montageprofil angeordneten Beleuchtungsstreifens;
Fig. 2 eine perspektivische Ansicht eines Teils eines Beleuchtungsstreifens mit Platine und Leuchtelement in COB-Technik;
Fig. 3 eine perspektivische Ansicht eines Teils eines Beleuchtungsstreifens mit Platine und Leuchtelementen in SMD-Technik;
Fig. 4 eine schematische Ansicht eines ersten Bereichs eines Beleuchtungsstreifens mit Platine und Leuchtelementen in COB-Technik im Querschnitt;
Fig. 5 eine schematische Ansicht eines ersten Bereichs eines Beleuchtungsstreifens mit Platine und Leuchtelementen in SMD-Technik im Querschnitt;
Fig. 6 eine schematische Ansicht eines zweiten Bereichs eines Beleuchtungsstreifens im Querschnitt;
Fig. 7 eine schematische Aufsicht auf einen Beleuchtungsstreifen; und
Fig. 8 eine schematische Ansicht eines Fahrzeugs mit Beleuchtungsstreifen.

In der folgenden Figurenbeschreibung bezeichnen gleiche Bezugszeichen auch gleiche Elemente.

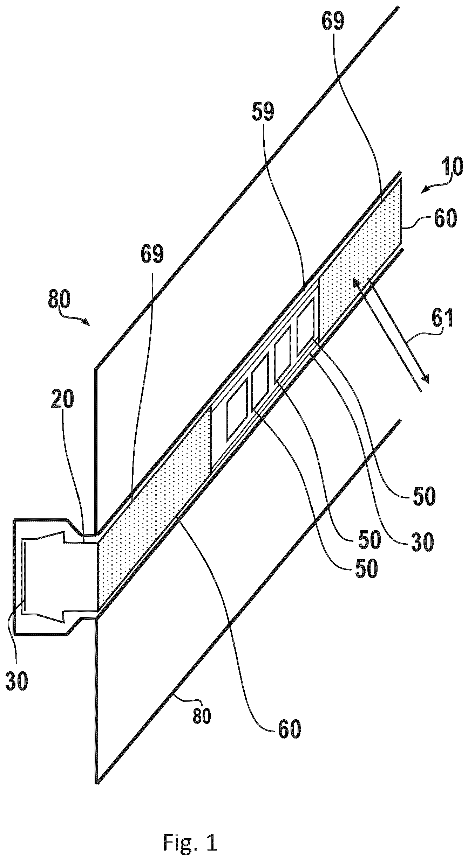

Fig. 1 der Zeichnung zeigt eine schematische perspektivische Ansicht eines Teils eines Beleuchtungsstreifens 10 in einem Montageprofil 80. In der Fig. 1 ist am linken Rand ein Querschnitt des Montageprofils 80 mit dem darin angeordneten Beleuchtungsstreifen 10 gut erkennbar. Der Beleuchtungsstreifen 10 besteht aus dem Basisprofil 20, der darin angeordneten Platine 30, auf der Retroreflektoren 60 und Leuchtelemente 50 angeordnet sind. Der Bereich mit Leuchtelementen 50 hat das Bezugszeichen 59 für einen ersten Bereich. Bereiche mit Retroreflektoren 60 sind mit dem Bezugszeichen 69 für zweite Bereiche gekennzeichnet.

Die genannten Retroreflektoren 60 sind bevorzugt als abrollbare Folienstreifen ausgeführt. Solche Folien enthalten in ihrer Oberfläche eingebettete Reflektorelemente, die beispielsweise von Scheinwerfern einfallendes Licht in die Richtung reflektieren, aus der das Licht auf den Retroreflektor 60 eingestrahlt wird. Beispielhaft ist in Fig. 1 ein reflektierter Lichtstrahl mit dem Bezugszeichen 61 bezeichnet. Als Retroreflektor ausgeführte Folien können auch selbstklebend mit einer Haftschicht auf der nicht reflektierenden Seite hergestellt werden. Es können jedoch auch Retroreflektoren verwendet werden, die aus festem Kunststoff gefertigt sind und eine Vielzahl kleiner Reflektoren in Form sogenannter cube-corner Spiegel enthalten.

Das Montageprofil 80 kann ein gewöhnliches Profil sein, wie es typischerweise bei der Herstellung von Aufbauten für Lastkraftwagen und Anhänger verwendet wird. Solche Montageprofile werden üblicherweise aus Leichtmetall gefertigt. Sie können über Nuten verfügen, in die plattenförmige Bauelemente beispielsweise aus Kunststoff zur Vervollständigung des Aufbaus eingesetzt werden können.

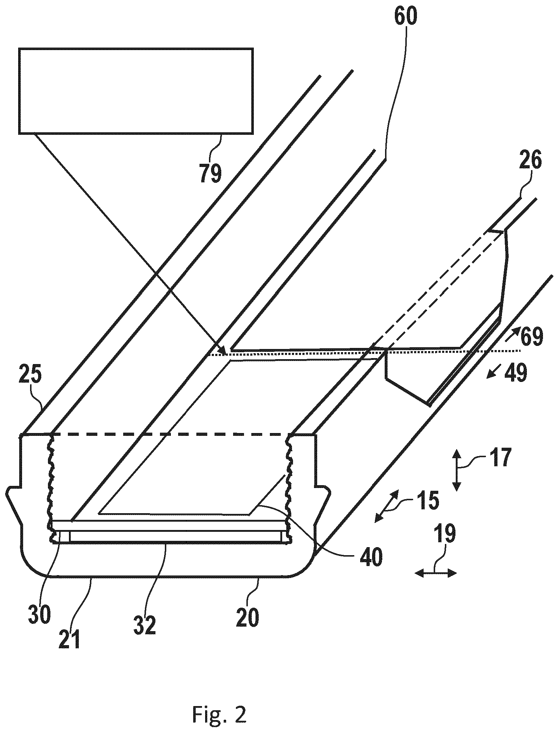

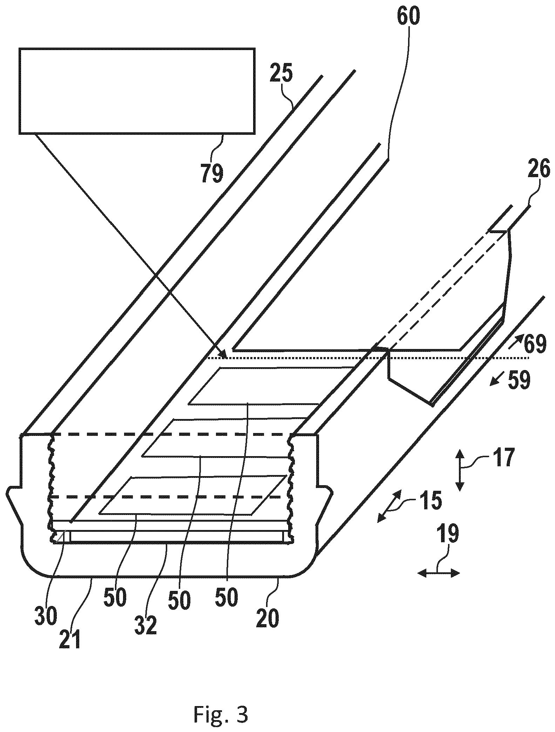

Wie in den Fig. 2 bis 6 ersichtlich, ist das Basisprofil 20 aus einer Bodenwand 21 und zwei Seitenwänden 25 und 26 aufgebaut. In Fig 2 und 3 ist die rechte Seitenwand durchbrochen dargestellt, um den Einblick in den Übergang zwischen den ersten und zweiten Bereichen deutlich zu machen. Die Trennung dieser Bereiche wird durch eine punktierte Linie dargestellt. Mit Pfeilen sind die Richtungen gekennzeichnet, in die sich die jeweiligen Bereiche 49, 59 und 69 von der punktierten Linie weg erstrecken.

In Fig 2 und 3 ist ersichtlich, dass an der zwischen den Seitenwänden 25 und 26 befindlichen Seite der Bodenwand 21 die Platine 30, auf der in Fig. 2 ein in COB-Technik gefertigtes Leuchtelement 40 erkennbar ist, während in der ansonsten identischen Fig. 3 drei in SMD-Technik auf der Platine 30 montierte Leuchtelemente 50 sichtbar sind. Die ersten Bereiche mit den aus Leuchtioden bestehenden Leuchtelementen 40 in Fig. 2 und 50 in Fig. 3 sind mit den Bezugszeichen 49 für COB und 59 für SMD bezeichnet.

In Fig 2 und 3 ist weiter ein auch als Trennwand bezeichnetes Trennelement 79 dargestellt, das entlang der punktierten Linie zwischen den ersten und zweiten Bereichen in das Basisprofil 20 auf die Platine 30 eingesetzt werden kann. Dieser Einsetzvorgang wird durch einen Pfeil symbolisiert.

Doppelpfeile kennzeichnen in Fig. 2 und Fig. 3 die Längsrichtung 15, die Hochrichtung 17 und die Querrichtung 19. Dadurch sind in beiden Fig. 2 und Fig. 3 zweite Bereiche 69 gut erkennbar. In diesen zweiten Bereichen 69 befinden sich Retroreflektoren 60, die auf der Platine 30 angeordnet sind. Vor dem Einbringen der Vergussmasse in das Basisprofil 20 können in Pfeilrichtung Trennelemente 79 zwischen den ersten Bereichen 49 oder 59 und den zweiten Bereichen 69 oder zwischen einzelnen Leuchtdioden 40 oder 50 in dem Basisprofil 20 angebracht werden. An der die Leuchtdioden 40 oder 50 tragenden Seite der Platine 30 können vorbestimmte nicht in den Figuren dargestellte Markierungen vorgesehen sein, welche Positionierungshilfslinien für den Benutzer darstellen, an denen der Benutzer ein Trennelement 70 an der Platine 30 positionieren kann.

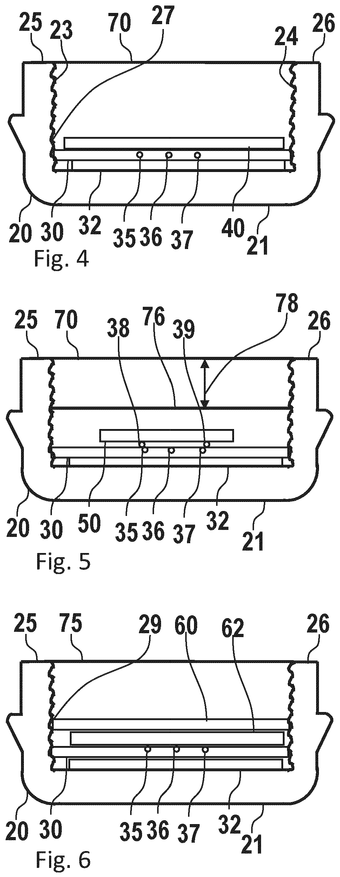

Fig. 4 und Fig. 5 sind Ansichten im Querschnitt von ersten Bereichen der Beleuchtungsstreifen 10, wobei in Fig. 4 ein vergleichsweise großflächiger Chip 40 in COB-Technik auf der Platine 30 angebracht wurde und in Fig. 5 Leuchtdioden 50 in SMD-Technik auf der Platine befestigt wurden. In der Darstellung der Fig.4 ist die mit 27 bezeichnete Vertiefung an der Innenseite 23 der Seitenwand 25 gut sichtbar.

Im Querschnitt der Platine 30 sind Leiterbahnen 35, 36 und 37 gut erkennbar. Die Zahl von drei Leiterbahnen 35, 36 und 37 wurde hier beispielhaft gewählt. Es können auch zwei oder mehr als drei Leiterbahnen verwendet werden. Weiter ist gut sichtbar, dass eine Haftschicht 32 der Befestigung der Platine 30 an der Bodenwand 21 des Basisprofils 20 dient. Diese Haftschicht 32 kann mittels eines Flüssigklebstoffs oder eines doppelseitigen Klebebands gebildet werden. In Fig. 5 ist darüber hinaus sichtbar, dass die in SMD-Technik montierte Leuchtdiode 50 über die Lötpunkte 38 und 39 mit den Leiterbahnen 35 und 37 der Platine 30 verbunden ist.

Während in Fig. 4 nur eine Vergussmasse 70 zum Einsatz kommt, werden bei der in Fig. 5 gezeigten Ausführungsform zwei Vergussmassen 70 und 76 verwendet. Die dritte Vergussmasse 76 kann auch dem Ausgleich der unterschiedlichen Höhen der Platine in den Bereichen zwischen den mit SMD-Technik an der Platine 30 befestigten einzelnen Leuchtdioden 50 und den mit Leuchtdioden 50 versehenen Bereichen der Platine 30 dienen. Die dritte Vergussmasse 76 kann weiter zur Anpassung der Höhenniveaus zwischen ersten und zweiten Bereichen dienen. Dadurch kann die erste Vergussmasse 70 sowohl in ersten Bereichen als auch in zweiten Bereichen mit der gleichen Dicke 78 aufgebracht werden. Diese Dicke 78 ist in Fig. 5 durch einen Doppelpfeil gekennzeichnet.

Fig. 6 ist eine Ansicht im Querschnitt eines zweiten Bereichs 69 eines Beleuchtungsstreifens 10. Es ist gut sichtbar, dass eine Haftschicht 62 der Befestigung des Retroreflektors 60 an der von der Bodenwand 21 des Basisprofils 20 abgewandten Seite der Platine 30 dient. Diese Haftschicht 62 kann ebenfalls mittels eines Flüssigklebstoffs oder eines doppelseitigen Klebebands gebildet werden. Hier ist auch die Vertiefung 29 in der Innenseite der Seitenwand 25 zur Aufnahme des Retroreflektors 60 gut sichtbar.

In der in Fig. 6 gezeigten Ausführungsform wird eine zweite Vergussmasse 75 in das Basisprofil 20 eingebracht, die sich von der ersten Vergussmasse 70 (siehe Fig. 4) unterscheidet. Diese Unterscheidung kann beispielsweise in einer anderen Einfärbung oder im Fehlen der die Diffusion begünstigenden Partikel bestehen. Die Diffusion begünstigende Partikel können die retroreflektierenden Eigenschaften des Retroreflektors 60 beeinträchtigen.

Fig. 4 stellt somit einen Querschnitt durch einen ersten Bereich 49 dar, während Fig. 5 einen Querschnitt durch einen ersten Bereich 59 zeigt. Fig. 6 ist schließlich ein Querschnitt durch einen zweiten Bereich 69. Die in Fig. 5 gezeigte Ausführungsform eines ersten Bereichs 59, in dem zwei unterschiedliche Vergussmassen verwendet werden, kann auch bei der in Fig. 4 gezeigten Ausführungsform eines ersten Bereichs 49 eingesetzt werden. Es ist weiter möglich, auch in einem zweiten Bereich 69 zwei übereinander geschichtete Vergussmassen einzusetzen.

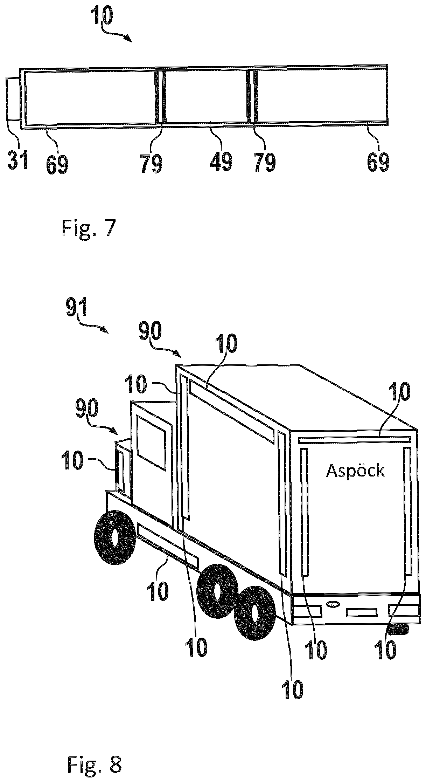

Fig. 7 zeigt eine Aufsicht auf einen Beleuchtungsstreifen 10. Hier werden die durch Trennelemente 79 voneinander separierten Bereiche 49 und 69 klar erkennbar verdeutlicht. Darüber hinaus ist der Steckverbinder 31 erkennbar, über den der elektrische Anschluss der Platine 30 des Beleuchtungsstreifens 10 erfolgt.

Fig. 8 zeigt ein Fahrzeug 91, dessen Aufbauten 90 mit Montageprofilen 80 gebildet sein können. In diesen Montageprofilen 80 oder anderen Vertiefungen am Aufbau 90 sind Beleuchtungsstreifen 10 angeordnet, die als SML und als Konturmarkierungen dienen können.

Bei dem Basisprofil 20 kann es sich um ein elastisches, im Querschnitt wannenförmiges oder kanalförmiges Profil handeln, welches beispielsweise aus einem thermoplastischen Elastomer (TPE), insbesondere einem thermoplastischen Elastomer auf Urethanbasis (TPU) gefertigt ist, oder auch auf Basis eines Polyvinylchlorid (PVC) Werkstoffs oder auch auf Basis eines elastischen duroplastischen Werkstoffs gefertigt ist.

Die Vergussmasse kann beispielsweise aus einem Polyurethan-Material gefertigt sein und beispielsweise transparent ausgebildet sein oder transluzent oder auch mehrschichtig ausgebildet sein. Beispielsweise kann eine die Leuchtdioden 40 oder 50 direkt einschließende Teilschicht an Vergussmasse 76 transparent und ein darüber angeordneter Bereich beziehungsweise Teilschicht an Vergussmasse 70 beispielsweise transluzent ausgebildet sein, sodass die Lichtemission der Leuchtdioden 40 oder 50 nicht behindert wird und das optische Erscheinungsbild an der Oberseite der Vergussmasse 70 gleichmäßig erscheint. Um ein transluzentes Erscheinungsbild der Teilschicht 70 zu erreichen, können einer klaren Vergussmasse Partikel beigemengt werden, die die Lichtdiffusion begünstigen.

Mit den vorstehend genannten Merkmalen lassen sich Beleuchtungsstreifen mit einer Längserstreckung von mehreren Metern Länge herstellen.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

10. Beleuchtungsstreifen
15. Längsrichtung
17. Hochrichtung
19. Querrichtung
20. Basisprofil
21. Bodenwand
23., 24. Innenseite einer Seitenwand
25., 26. Seitenwand
27., 29. Vertiefung
30. Platine
31. elektrischer Anschluss
32. Haftschicht
35. Leiterbahn
36. Leiterbahn
37. Leiterbahn
38. Lötpad
39. Lötpad
40. Leuchtelement
49. erster Bereich
50. Leuchtelement
59. erster Bereich
60. Retroreflektor
61. reflektiertes Licht
62. Haftschicht
69. zweiter Bereich
70. erste Vergussmasse
75. zweite Vergussmasse
76. dritte Vergussmasse
78. Dicke
79. Trennelement
80. Montageprofil
90. Fahrzeugaufbau
91. Fahrzeug

## Patentansprüche

1. Retroreflektierender linearer Beleuchtungsstreifen (10) mit einem Basisprofil (20), einer Platine (30) mit darauf angeordneten Leuchtelementen (40, 50) und mit mindestens einer Vergussmasse (70, 75, 76), wobei auf der Platine (30) ein Retroreflektor (60) angeordnet ist, **dadurch gekennzeichnet, dass** der Retroreflektor (60) und die Leuchtelemente (40, 50) von einer Vergussmasse (70, 75) bedeckt sind und dass in einer Längsrichtung (15) der Platine (30) gesehen entweder mindestens ein erster Bereich (49, 59) angeordnet ist, auf dem mindestens ein Leuchtelement (40, 50) angeordnet ist, oder mindestens ein zweiter Bereich (69) angeordnet ist, auf dem der Retroreflektor (60) angeordnet ist.

2. Beleuchtungsstreifen (10) nach Anspruch 1, **dadurch gekennzeichnet, dass** das Basisprofil (20) in einem Montageprofil (80) derart anordenbar ist, dass Beleuchtungsstreifen (10) und Montageprofil (80) flächenbündig miteinander abschließen.

3. Beleuchtungsstreifen (10) nach Anspruch 1 oder 2, **dadurch gekennzeichnet, dass** das Basisprofil (20) an mindestens einer Innenseite (23, 24) einer Seitenwand (25, 26) mit einer Vertiefung (27, 29) zur Aufnahme des Retroreflektors (60) und/oder der Platine (30) versehen ist.

4. Beleuchtungsstreifen (10) nach einem der vorhergehenden Ansprüche, **dadurch gekennzeichnet, dass** eine erste Vergussmasse (70), die auf einer von einer Bodenwand (21) des Basisprofils (20) abgewandten Seite angeordnet ist, sowohl den mindestens einen ersten Bereich (49, 59) als auch den mindestens einen zweiten Bereich (69) durchgehend bedeckt.

5. Beleuchtungsstreifen (10) nach einem der vorhergehenden Ansprüche, **dadurch gekennzeichnet, dass** ein Trennelement (79) im Basisprofil (20) zwischen den ersten (49, 59) und zweiten (69) Bereichen oder zwischen Leuchtelementen (40, 50) angeordnet ist.

6. Beleuchtungsstreifen (10) nach einem der Ansprüche 1 bis 3, **dadurch gekennzeichnet, dass** eine erste Vergussmasse (70) den oder die ersten Bereiche (49, 59) bedeckt und eine zweite Vergussmasse (75) den oder die zweiten Bereiche (69) bedeckt.

7. Beleuchtungsstreifen (10) nach einem der vorhergehenden Ansprüche, **dadurch gekennzeichnet, dass** mindestens eine der Vergussmassen (70, 75, 76) mit Füllstoff versehen ist, der eine Volumenstreuung von mindestens einem Leuchtelement abgegebenen Lichts bewirkt.

8. Beleuchtungsstreifen (10) nach einem der vorhergehenden Ansprüche, **dadurch gekennzeichnet, dass** mindestens eine der Vergussmassen (70, 75, 76) eine in einem für Menschen sichtbaren Spektralbereich gefärbt ist.

9. Beleuchtungsstreifen (10) nach einem der vorhergehenden Ansprüche, **dadurch gekennzeichnet, dass** eine Dicke (78) einer zweiten Vergussmasse (75), die auf dem Retroreflektor (60) angeordnet ist, so gewählt ist, dass reflektiertes Licht (61) maximale Intensität aufweist.

10. Beleuchtungsstreifen (10) nach einem der Ansprüche 1 bis 9, **dadurch gekennzeichnet, dass** Leuchtelemente (40) und Platine (30) in COB-Technik ausgeführt sind.

11. Beleuchtungsstreifen (10) nach einem der vorhergehenden Ansprüche, **dadurch gekennzeichnet, dass** Leuchtelemente (50) und Platine (30) in SMD-Technik ausgeführt sind.

12. Beleuchtungsstreifen (10) nach einem der vorhergehenden Ansprüche, **dadurch gekennzeichnet, dass** der mindestens eine erste Bereich (49, 59) der Platine (30) mit den darauf angeordneten Leuchtelementen (40, 50) so mit dritter Vergussmasse (76) bedeckt ist, dass eine von einer Bodenwand (29) des Basisprofils (20) abgewandte Oberfläche der Vergussmasse (76) eben ist.

13. Montageprofil (80) zur Aufnahme eines Beleuchtungsstreifens (10) nach einem der Ansprüche 1 bis 12.

14. Fahrzeugaufbau (90) mit einem Beleuchtungsstreifen (10) nach einem der Ansprüche 1 bis 12.
